# FASCICULE DE BREVET EUROPEEN

(11) **EP 1 674 337 B1**
(45) Date de publication et mention de la délivrance du brevet: **10.02.2010**
(21) Numéro de dépôt: 04293135.2
(22) Date de dépôt: 24.12.2004
(51) Int. Cl.: B60Q 1/04, F16B 5/02

(54) **Dispositif pour fixation d'un bloc optique sur la structure du véhicule automobile**
Vorrichtung für die Montage einer Beleuchtungseinheit auf einem Kraftfahrzeug
Assembly of a lighting unit to the structure of a vehicle

(43) Date de publication de la demande: 28.06.2006
(73) Titulaire: COMPAGNIE PLASTIC OMNIUM, 69007 Lyon (FR)
(72) Inventeur: Andre, Gérald, 01500 Amberieu en Bugey (FR); Fayt, Arnold, 01640 Jujurieux (FR)
(74) Mandataire: Remy, Vincent Noel Paul

(56) Documents cités:
- EP-A- 0 860 615
- FR-A- 1 414 007
- FR-A- 2 391 387
- FR-A- 2 771 992
- GB-A- 2 281 260

## Description

La présente invention concerne un dispositif de liaison dans une direction de liaison d'une première et d'une seconde pièces d'un véhicule automobile. L'invention concerne également un ensemble pour véhicule automobile comprenant un bloc optique.

On connaît déjà, dans l'état de la technique, notamment d'après DE 19949467 et EP 0 860 615, un dispositif de liaison conforme au préambule de la revendication 1.

Conformément à ce document, on sait relier une première et une seconde pièces à l'aide d'une vis et d'un écrou.

La première pièce peut comprendre une première partie comportant une ouverture circulaire d'insertion de la vis, tandis que la seconde pièce comprend une seconde partie comportant une ouverture oblongue d'insertion de la vis, qui autorise la fixation des deux pièces dans plusieurs positions relatives, dites positions de liaison, selon la direction oblongue.

La solidarisation de l'ensemble est obtenue par serrage de la vis dans l'écrou.

Dans le cadre d'une liaison entre pièces sur une chaîne de montage de véhicules automobiles, une telle opération de serrage n'est pas toujours exécutable pour des raisons d'accès à la vis et il est de toutes façons souhaitable que la liaison se réalise de la manière la plus rapide et la plus simple possible.

L'invention a pour but de fournir un dispositif de liaison:
- pour lequel la solidarisation des première et seconde parties ne nécessite pas d'accéder à la zone de liaison ;
- nécessitant un faible nombre d'actions pour réaliser la liaison des première et seconde pièces dans la direction de liaison.

A cet effet, l'invention a pour objet un dispositif de liaison dans une direction de liaison d'une première et d'une seconde pièces d'un véhicule automobile, comportant :
- une première partie destinée à être solidarisée à la première pièce,
- une seconde partie destinée à être solidarisée à la seconde pièce,
- un organe mobile par rapport à la première partie, pouvant prendre une position de fermeture, dans laquelle ledit organe mobile est solidaire de la première partie dans la direction de liaison,
la seconde partie et l'organe mobile en position de fermeture étant aptes à s'accoupler dans plusieurs positions relatives selon la direction de liaison, caractérisé en ce que la seconde partie et l'organe mobile sont agencés de manière que leur accouplement les solidarise dans la direction de liaison, et le dispositif de liaison comporte deux ensembles de nervures perpendiculaires à la direction de liaison et destinées à s'engrener pour réaliser la solidarisation de l'organe mobile avec la seconde partie lors de l'accouplement.

Ainsi, l'accouplement solidarise également la première partie et la seconde partie dans la direction de liaison, sans nécessiter d'accéder à la zone de liaison, et en une seule action.

Un dispositif de liaison selon l'invention peut en outre comporter l'une ou plusieurs des caractéristiques suivantes :
- l'organe mobile a une forme allongée et est monté coulissant suivant sa direction longitudinale sur la première partie ;
- le dispositif de liaison comporte deux ensembles de nervures perpendiculaires à la direction de liaison et destinées à s'engrener pour réaliser la solidarisation de l'organe mobile avec la seconde partie lors de l'accouplement ;
- un ensemble de nervures est porté par l'organe mobile et l'autre ensemble de nervures est porté par la seconde partie, chacune des nervures d'un des ensembles comportant une extrémité en biseau grâce à laquelle elle peut s'engrener avec des nervures de l'autre ensemble selon un mouvement de translation parallèle auxdites nervures ;
- la seconde partie comporte un élément mobile et une base fixe, l'organe mobile et l'élément mobile étant aptes à s'accoupler pour se solidariser dans la direction de liaison, un des ensembles de nervures est porté par l'élément mobile et l'autre ensemble de nervures est portée par la base fixe, l'élément mobile et la base fixe étant agencés pour que les nervures soient désengrenées lorsque l'organe mobile et l'élément mobile sont désaccouplés et engrenés lorsque l'organe mobile et l'élément mobile sont accouplés ;
- l'élément mobile comporte une ouverture et l'organe mobile est apte à s'accoupler avec l'élément mobile en se logeant dans cette ouverture ;
- l'élément mobile et/ou la base fixe est élastiquement déformable et est conformé de manière que les nervures soient désengrenées lorsque cet élément mobile et/ou cette base fixe est au repos et engrenées lorsque cet élément mobile et/ou cette base fixe est déformé par l'organe mobile accouplé avec l'élément mobile ;
- l'élément mobile est un coulisseau et la base fixe est un cadre contenant le coulisseau, le coulisseau et le cadre ayant des faces en regard portant les ensembles de nervures.

L'invention a également pour objet un ensemble pour véhicule automobile comprenant bloc optique comportant une première partie du dispositif de liaison selon l'invention.

L'invention sera mieux comprise à l'aide de la description qui va suivre, donnée uniquement à titre d'exemple et faite en se référant aux dessins annexés dans lesquels :
- la figure 1 est une vue éclatée d'un dispositif de liaison selon un premier mode de réalisation de l'invention entre un bloc optique de véhicule automobile et une patte de fixation du véhicule automobile ;
- la figure 2 représente en détail une partie du dispositif de liaison selon le premier mode de réalisation de la figure 1 ; et
- la figure 3 représente un dispositif de liaison selon un second mode de réalisation de l'invention entre le bloc optique et la patte de fixation du véhicule automobile.

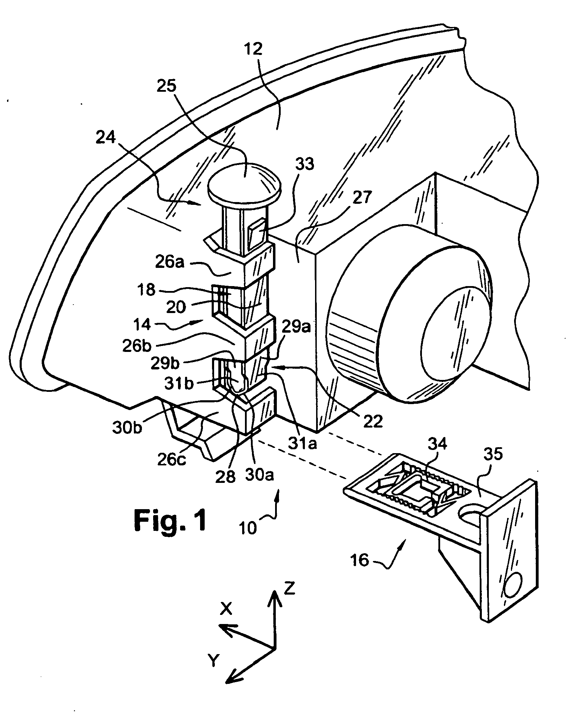

Le dispositif de liaison, désigné sur la figure 1 par la référence générale 10, est destiné à lier un bloc optique 12 à une pièce de structure (par exemple une face avant technique, non représentée) dans une direction de liaison X (qui est la direction longitudinale du véhicule).

La position du bloc optique est déterminée par des moyens externes (non représentés) et le bloc optique doit être fixé sur la structure du véhicule en conservant cette position déterminée par les moyens externes. Le dispositif de liaison assure donc la fixation du bloc optique sur la structure du véhicule tout en respectant la position relative du bloc optique par rapport à la pièce de structure.

Au sens de l'invention, le bloc optique constitue la première pièce et la pièce de structure constitue la seconde pièce.

Le dispositif de liaison 10 comporte une première partie 14 solidaire du bloc optique 12. Il comporte également une patte de fixation 16 constituant une seconde partie destinée à être solidarisée à la pièce de structure.

On notera que, dans le mode de réalisation représenté, la première partie 14 est venue de matière avec le bloc optique 12, et est donc solidarisée avec ce bloc optique dès le moulage de celui ci.

Le dispositif de liaison comprend un pieu 18, élément allongé constituant un organe mobile selon sa direction longitudinale par rapport à la première partie 14, c'est-à-dire également par rapport au bloc optique 12. Le pieu 18 est constitué par une lame 20, repliée en U, et par un disque 25. Ainsi, le pieu 18 a une forme générale tubulaire à section carrée, ouverte sur deux côtés opposés et délimitée à une extrémité 22 par la lame 20 repliée et à une autre extrémité 24 par une tête formée par le disque 25.

L'extrémité 22 comprend deux premières portions rectangulaires parallèles 29a, 29b de même largeur que la section courante de la lame 20. Chaque première portion parallèle 29a, 29b se prolonge par une partie trapézoïdale dont la largeur va décroissant en s'éloignant de la tête 25, jusqu'à une seconde portion rectangulaire 31 a, 31 b de largeur réduite, parallèle à la première portion 29a, 29b.

Les deux secondes portions rectangulaires parallèles se prolongent par deux pans obliques 30a, 30b de même largeur réduite, convergeant en une arête commune 28.

La première partie 14 du dispositif de liaison 10 comporte une paroi en angle 27 appartenant au boîtier du bloc optique et trois pattes 26a, 26b, 26c à section en L qui maintiennent le pieu 18 contre cette paroi 27. La paroi 27 et les pattes 26a, 26b, 26c forment une glissière dans laquelle le pieu 18 peut coulisser longitudinalement par rapport à cette première partie 14.

Ainsi, le pieu 18 est mobile par rapport au bloc optique 12, selon une direction verticale Z, perpendiculaire à la direction de liaison X, mais est solidaire de la première partie 14 dans la direction de liaison X.

Le pieu 18 comporte enfin un taquet 33 mobile entre une position escamotée dans laquelle il ne gène pas le coulissement du pieu 18 et une position sortie, à retour élastique, dans laquelle il bute contre la patte 26a de manière à empêcher le mouvement de l'organe mobile 18 en direction de la tête 25.

L'agencement du taquet mobile 33 est tel que le glissement du pieu en direction de l'extrémité 22 l'escamote automatiquement.

La patte de fixation 16, ou seconde partie, du dispositif de liaison 10 comporte une base fixe 35 et un élément 34 mobile par rapport à cette base fixe dans la direction de liaison X.

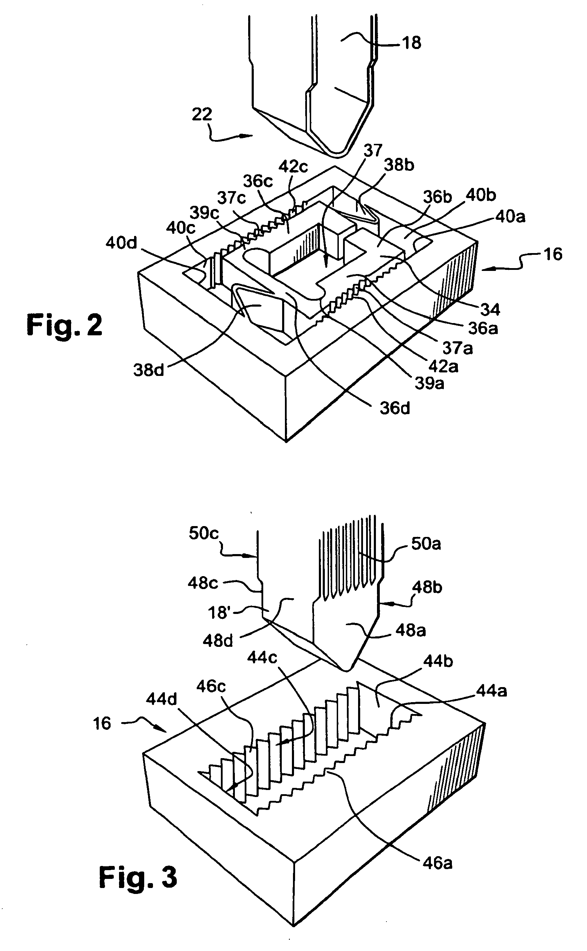

La seconde partie 16 et l'extrémité 22 du pieu 18 sont représentés plus en détail sur la figure 2.

L'élément mobile 34 est un coulisseau de forme générale rectangulaire, comportant quatre segments 36a, 36b, 36c, 36d, qui délimitent une ouverture rectangulaire 37 sensiblement de même largeur (dans la direction Y) que les portions de largeur réduite 29a, 29b du pieu 18.

Dans la direction de liaison X, l'ouverture 37 a une largeur sensiblement égale à celle du pieu 18.

Deux segments opposés 36a, 36c, orientés parallèlement à la direction de liaison X, portent, chacun sur sa face extérieure, un ensemble de nervures parallèles 37a et 37c, perpendiculaires à la direction de liaison Y.

L'ensemble 37a, 37c est mobile dans la direction Y, par déformation du coulisseau 34. Cette déformation est facilitée par le fait que le coulisseau 34 est fendu dans son segment 36b et par le fait que les segments 36a, 36c comportent chacun une diminution d'épaisseur 39a, 39c.

Les nervures de chaque ensemble mobile 37a, 37b sont linéaires, parallèles entre elles et s'étendent dans la direction Y. Dans l'exemple illustré sur la figure 2, ces nervures sont de section sensiblement triangulaire.

Les deux segments opposés 36b, 36d, orientés dans la direction Y, sont solidaires d'une languette, respectivement 38b, 38d, de liaison du coulisseau 34 avec la base fixe 35.

Les languettes 38b, 38d sont en accordéon, de telle sorte qu'elles maintiennent le coulisseau 34 dans une position de repos selon la direction de liaison X par rapport à la seconde partie 16, mais permettent, par déformation élastique, un déplacement du coulisseau 34 par rapport à la base fixe 35, essentiellement dans la direction de liaison X.

La base fixe 35 est un cadre rectangulaire contenant le coulisseau 34, comportant quatre faces intérieures 40a, 40b, 40c, 40d. Chaque face 40a, 40b, 40c, 40d est disposée en vis-à-vis et à distance d'un segment 36a, 36b, 36c, 36d du coulisseau 34.

Les deux faces 40b, 40d en vis-à-vis des segments 36b, 36d selon Y portent les languettes 38b, 38d.

La distance entre les deux faces 40b, 40d en vis-à-vis des segments 36b, 36d est déterminée pour permettre un déplacement suffisant du coulisseau 34 selon la direction de liaison X.

Chacune des deux faces 40a, 40c en vis-à-vis des segments 36a, 36c selon X comporte un ensemble fixe 42a, 42c de nervures, disposé face à l'ensemble mobile de nervures du segment 36a, 36c en vis-à-vis.

Les nervures de chaque ensemble mobile 37a, 37c et les nervures de chaque ensemble fixe 42a, 42c en vis-à-vis sont destinées à s'engrener.

Le fonctionnement du dispositif illustré par les figures 1 et 2 va à présent être décrit.

Le pieu 18 est initialement dans une position relevée, représentée à la figure 1, dans laquelle il est libre de glisser par rapport au bloc optique, c'est-à-dire notamment par rapport à la première partie 14 de la liaison.

Le pieu 18 peut prendre une position abaissée, également désignée de fermeture, dans laquelle le disque 25 bute contre la patte 26a, empêchant le glissement du pieu 18 vers le bas (par rapport au dessin), et dans laquelle le taquet 33 bute également contre la patte 26a, empêchant le glissement du pieu 18 vers le haut.

On notera que dans cette position de fermeture, le pieu 18 est toujours solidaire de la première partie 14 dans la direction de liaison X.

En général, une transition au cours de laquelle le pieu 18 passe de la position relevée à la position de fermeture est obtenue en frappant sur le disque 25, par exemple avec un maillet.

La transition provoque les événements suivants :
- centrage du coulisseau 34,
- accouplement du pieu 18 et du coulisseau 34,
- solidarisation du coulisseau 34 et la de la base fixe 16.

Au cours de l'étape de centrage du coulisseau 34, l'extrémité 22 de l'organe mobile 18 s'insère dans l'ouverture de l'élément mobile 34.

Le bloc optique 12 et la pièce de structure (non représentée) étant l'un par rapport à l'autre dans une position relative, selon X, déterminée par des moyens externes, mais qui n'est pas connue à l'avance au moment de la transition, le coulisseau 34 se positionne dans l'axe du pieu 18 sous l'action de deux pans obliques convergents 30a, 30b du pieu 18, en quittant sa position de repos par déformation élastique des languettes en accordéon. Le pieu 18 déplace ainsi le coulisseau 34 selon la direction X jusqu'à une position relative dans laquelle l'ouverture rectangulaire 37 du coulisseau 34 est alignée avec le pieu 18. Les deux portions parallèles 31 a, 31 b de largeur réduite du pieu peuvent alors s'insérer dans le coulisseau et cette insertion partielle du pieu 18 dans le coulisseau constitue l'étape d'accouplement.

Le pieu poursuivant son insertion dans le coulisseau, les deux parties trapézoïdales rencontrent les segments 36a, 36c et les écartent, ce qui déforme le coulisseau de manière à faire s'engrainer les nervures en rapprochant chaque ensemble mobile de nervures 37a, 37c porté par le coulisseau 34, de l'ensemble fixe de nervures 42a, 42c porté en vis-à-vis par la base fixe 35. Les nervures s'engrainent ainsi par leurs sommets, ce qui réalise la solidarisation du pieu 34 et de la base fixe 35 dans la direction de liaison X.

On a représenté, sur la figure 3, un dispositif de liaison selon un second mode de réalisation de l'invention. Les éléments de cette figure 3 analogues aux éléments des figures précédentes portent des références identiques.

La seconde partie 16 du dispositif de liaison est ici d'un seul tenant et comporte une ouverture rectangulaire de logement du pieu 18.

Cette ouverture de logement est délimitée par quatre faces 44a, 44b, 44c, 44d. Deux faces 44a, 44c opposées comportent chacune un ensemble fixe 46a, 46c de nervures.

Les nervures de chaque ensemble fixe 46a, 46c sont parallèles entre elles et orientées dans la direction de glissement du pieu 18' par rapport à la première partie (non représentée sur la figure 3), c'est-à-dire dans la direction Z.

Ce pieu 18' est de forme tubulaire à section carrée, et comporte quatre faces 48a, 48b, 48c, 48d, qui, lorsque l'organe mobile 18 est en position de fermeture, sont respectivement en vis-à-vis des faces 44a, 44b, 44c, 44d.

Chacune des faces 48a, 48c pouvant être en vis-à-vis des faces 44a, 44c de la seconde partie 16 comporte un ensemble de nervures 50a, 50c, comportant chacune une extrémité inférieure (selon le dessin) 52a en biseau. Cet ensemble de nervures est désigné mobile en raison de la mobilité du pieu.

Les rainures des ensembles mobiles 50a, 50c sont destinées à s'engrainer avec les rainures des ensembles fixes 46a, 46c de la seconde partie 16 par leur extrémité en biseau, lorsque le pieu 18' se loge dans la seconde partie 16.

Le fonctionnement du dispositif représenté sur la figure 3 va à présent être décrit.

D'une manière analogue au fonctionnement du dispositif des figures 1 et 2, le pieu 18' passe de la position relevée à la position de fermeture.

Au cours de cette transition, le pieu 18' s'insère dans l'ouverture de logement ménagée dans la seconde partie 16, et les rainures des ensembles mobiles 50a, 50c s'engrainent avec les rainures des ensembles fixes 46a, 46c de la seconde partie 16. La seconde partie 16 est ainsi solidarisée à l'organe mobile 18 dans la direction de liaison X, tout en respectant la position selon X, imposée par des moyens externes, entre le boîtier optique et la pièce de structure.

On notera que l'invention n'est pas limitée aux modes de réalisation précédemment décrits.

En particulier, la présence de rainures n'est pas indispensable à l'invention.

## Revendications

1. Dispositif de liaison dans une direction de liaison (X) d'une première (12) et d'une seconde pièces d'un véhicule automobile, comportant :
- une première partie (14) destinée à être solidarisée à la première pièce (12),
- une seconde partie (16) destinée à être solidarisée à la seconde pièce,
- un organe mobile (18) par rapport à la première partie (14), pouvant prendre une position de fermeture, dans laquelle ledit organe mobile (18) est solidaire de la première partie (14) dans la direction de liaison (X),
la seconde partie (16) et l'organe mobile (18) en position de fermeture étant aptes à s'accoupler dans plusieurs positions relatives selon la direction de liaison (X), **caractérisé en ce que** :
- la seconde partie (16) et l'organe mobile (18) sont agencés de manière que leur accouplement les solidarise dans la direction de liaison (X), et
- le dispositif de liaison comporte deux ensembles de nervures perpendiculaires (37a, 42a, 37c, 42c ; 50a, 46a, 50c, 46c) à la direction de liaison (X) et destinées à s'engrener pour réaliser la solidarisation de l'organe mobile (18) avec la seconde partie (16) lors de l'accouplement.

2. Dispositif de liaison selon la revendication 1, dans lequel l'organe mobile (18) a une forme allongée et est monté coulissant suivant sa direction longitudinale sur la première partie (14).

3. Dispositif de liaison selon la revendication 1 ou 2, dans lequel un ensemble de nervures (50a, 50c) est porté par l'organe mobile (18') et l'autre ensemble de nervures (46a, 46c) est porté par la seconde partie (16), chacune des nervures d'un des ensembles comportant une extrémité en biseau grâce à laquelle elle peut s'engrener avec des nervures de l'autre ensemble selon un mouvement de translation parallèle auxdites nervures.

4. Dispositif de liaison selon la revendication 1 ou 2, dans lequel la seconde partie comporte un élément mobile (34) et une base fixe (35), l'organe mobile (18) et l'élément mobile (34) étant aptes à s'accoupler pour se solidariser dans la direction de liaison, un des ensembles de nervures (37a, 37c) est porté par l'élément mobile et l'autre ensemble de nervures (42a, 42c) est portée par la base fixe, l'élément mobile (34) et la base fixe (35) étant agencés pour que les nervures soient désengrenées lorsque l'organe mobile (18) et l'élément mobile (34) sont désaccouplés et engrenés lorsque l'organe mobile (18) et l'élément mobile (34) sont accouplés

5. Dispositif de liaison selon la revendication 4, dans lequel l'élément mobile (34) comporte une ouverture (37) et l'organe mobile (18) est apte à s'accoupler avec l'élément mobile (34) en se logeant dans cette ouverture (37).

6. Dispositif de liaison selon la revendication 4 ou 5, dans lequel l'élément mobile (34) et/ou la base fixe (35) est élastiquement déformable et est conformé de manière que les nervures soient désengrenées lorsque cet élément mobile (34) et/ou cette base fixe (35) est au repos et engrenées lorsque cet élément mobile (34) et/ou cette base fixe (35) est déformé par l'organe mobile (18) accouplé avec l'élément mobile (34).

7. Dispositif de liaison selon l'une quelconque des revendications 4 à 6, dans lequel l'élément mobile (34) est un coulisseau et la base fixe (36) est un cadre contenant le coulisseau (34), le coulisseau (34) et le cadre (35) ayant des faces en regard portant les ensemble de nervures.

8. Ensemble pour véhicule automobile comprenant un dispositif de liaison selon l'une quelconque des revendications 1 à 7, l'ensemble comportant un bloc optique (12) qui constitue la première pièce et comporte la première partie du dispositif de liaison.

9. Ensemble pour véhicule automobile selon la revendication 8, comportant une patte de fixation (26a, 26b, 26c) constituant la seconde partie dudit dispositif de liaison.

## Claims

1. An assembly device for assembling first and second motor vehicle parts (12, 16) in an assembly direction (X), the device comprising:
· a first portion (14) for securing to the first part (12);
· a second portion (16) for securing to the second part; and
· a movable member (18) that is movable relative to the first portion (14) and capable of taking up a closed position in which said movable member (18) is secured to the first portion (14) in the assembly direction (X);
the second portion (16) and the movable member (18) in the closed position being suitable for coupling together in a plurality of relative positions in the assembly direction (X), the device being **characterized in that**:
· the second portion (16) and the movable element (18) are arranged in such a manner that, on being coupled together, they are secured to each other in the assembly direction (X); and
· the assembly device includes two sets of ribs (37a, 42a, 37c, 42c; 50a, 46a, 50c, 46c) perpendicular to the assembly direction (X) and designed to engage mutually so as to secure the movable member (18) with the second portion (16) during coupling.

2. An assembly device according to claim 1, wherein the movable member (18) is elongate in shape and is mounted to slide in its longitudinal direction relative to the first portion (14).

3. An assembly device according to claim 1 or claim 2, wherein one set of ribs (50a, 50c) is carried by the movable member (18') and the other set of ribs (46a, 46c) is carried by the second portion (16), each of the ribs in one of the sets having a chamfered end enabling it to engage with the ribs of the other set by moving in translation parallel to said ribs.

4. An assembly device according to claim 1 or claim 2, wherein the second portion includes a movable element (34) and a stationary base (35), the movable member (18) and the movable element (34) being suitable for coupling together to be secured to each other in the assembly direction, one of the sets of ribs (37a, 37c) being carried by the movable element and the other set of ribs (42a, 42c) is carried by the stationary base, the movable element (34) and the stationary base (35) being arranged so that the ribs are disengaged when the movable member (18) and the movable element (34) are decoupled, and so that they are mutually engaged when the movable member (18) and the movable element (34) are coupled together.

5. An assembly device according to claim 4, wherein the movable element (34) includes an opening (37) and the movable member (18) is suitable for coupling with the movable element (34) by being received in said opening (37).

6. An assembly device according to claim 4 or claim 5, wherein the movable element (34) and/or the stationary base (35) is elastically deformable and is shaped in such a manner that the ribs are disengaged when the movable element (34) and/or the stationary base (35) is at rest, and that they are mutually engaged when the movable element (34) and/or the stationary base (35) is deformed by the movable member (18) coupled with the movable element (34).

7. An assembly device according to any one of claims 4 to 6, wherein the movable element (34) is a slider, and the stationary base (35) is a frame containing the slider (34), the slider (34) and the frame (35) having facing faces that carry the sets of ribs.

8. An assembly for a motor vehicle including an assembly device according to any one of claims 1 to 7, the assembly comprising a headlight unit (12) that constitutes the first part and that includes the first portion of the assembly device.

9. An assembly for a motor vehicle according to claim 8, including a fastener tab (26a, 26b, 26c) constituting the second portion of said assembly device.

## Patentansprüche

1. Vorrichtung zur Verbindung in einer Richtung (X) der Verbindung von einem ersten (12) und einem zweiten Stück eines Kraftfahrzeugs, umfassend:
- ein erstes Teil (14), bestimmt zum Befestigen am ersten Stück (12),
- ein zweites Teil (16), bestimmt zum Befestigen am zweiten Stück,
- ein zum ersten Teil (14) bewegliches Glied (18), das eine Schließstellung einnehmen kann, in der das bewegliche Glied (18) am ersten Teil (14) in der Verbindungsrichtung (X) befestigt ist, wobei das zweite Teil (16) und das bewegliche Glied (18) in der Schließstellung in mehreren Stellungen in der Verbindungsrichtung (X) einrasten können, **dadurch gekennzeichnet, dass**:
- das zweite Teil (16) und das bewegliche Glied (18) so angeordnet sind, dass sie ihr Einrasten in der Verbindungsrichtung befestigt, und
- die Verbindungsvorrichtung zwei Einheiten von senkrechten Rippen (37a, 42a, 37c, 42c; 50a, 46a, 50c, 46c) in der Verbindungsrichtung (X) umfasst, die zum Eingreifen für das Herstellen der Befestigung des beweglichen Glieds (18) am zweiten Teil (16) beim Einrasten bestimmt sind.

2. Verbindungsvorrichtung nach Anspruch 1, wobei das bewegliche Glied (18) eine längliche Form aufweist und auf dem ersten Teil (14) in Längsrichtung verschiebbar montiert ist.

3. Verbindungsvorrichtung nach Anspruch 1 oder 2, wobei eine Einheit von Rippen (50a, 50c) vom beweglichen Glied (18') getragen wird und die andere Einheit von Rippen (46a, 46c) vom zweiten Teil (16) getragen wird, wobei jede der Rippen von einer der Einheiten ein schräges Ende aufweist, durch das es in die Rippen der anderen Einheit in einer translatorischen Bewegung parallel zu den Rippen eingreifen kann.

4. Verbindungsvorrichtung nach einem der Ansprüche 1 und 2, wobei das zweite Teil ein mobiles Element (34) und eine feste Basis (35) umfasst, wobei das bewegliche Glied (18) und das bewegliche Element (34) einrasten können, um sich in der Verbindungsrichtung zu befestigen, wobei eine der Einheiten von Rippen (37a, 37c) vom beweglichen Element getragen wird und die andere Einheit von Rippen (42a, 42c) von der festen Basis getragen wird, wobei das bewegliche Element (34) und die feste Basis (35) so angeordnet sind, dass die Rippen ausgerückt werden, wenn das bewegliche Glied (18) und das bewegliche Element (34) ausgerastet werden, und eingreifen, wenn das bewegliche Glied (18) und das bewegliche Element (34) eingerastet werden.

5. Verbindungsvorrichtung nach Anspruch 4, wobei das bewegliche Element (34) eine Öffnung (37) umfasst und das bewegliche Glied (18) im beweglichen Element (34) durch Aufnahme in dieser Öffnung (37) einrasten kann.

6. Verbindungsvorrichtung nach Anspruch 4 oder 5, wobei das bewegliche Element (34) und/oder die feste Basis (35) elastisch verformbar und so gestaltet sind, dass die Rippen ausgerückt sind, wenn das bewegliche Element (34) und/oder die feste Basis (35) in Ausgangsstellung sind, und eingreifen, wenn das bewegliche Element (34) und/oder die feste Basis (35) vom im beweglichen Element (34) eingerasteten beweglichen Glied (18) verformt werden.

7. Verbindungsvorrichtung nach einem der Ansprüche 4 bis 6, wobei das bewegliche Element (34) ein Gleitstück ist und die feste Basis (35) ein Rahmen ist, der das Gleitstück (34) enthält, wobei das Gleitstück (34) und der Rahmen (35) gegenüberliegende Seiten aufweisen, welche die Einheiten von Rippen tragen.

8. Einheit für ein Kraftfahrzeug, umfassend eine Verbindungsvorrichtung nach einem der Ansprüche 1 bis 7, wobei die Einheit einen Scheinwerfereinsatz (12) umfasst, der das erste Stück darstellt und das erste Teil der Verbindungsvorrichtung umfasst.

9. Einheit für ein Kraftfahrzeug nach Anspruch 8, umfassend eine Befestigungslasche (26a, 26b, 26c), welche das zweite Teil der Verbindungsvorrichtung darstellt.
